(19) Europäisches Patentamt
European Patent Office
Office européen des brevets

(11) Numéro de publication : **0 512 889 A1**

# (12) DEMANDE DE BREVET EUROPEEN

(21) Numéro de dépôt : **92401190.1**

(22) Date de dépôt : **24.04.92**

(51) Int. Cl.$^5$ : **C08G 63/91,** C08G 63/685, C10L 1/22

(30) Priorité : **02.05.91 FR 9105497**

(43) Date de publication de la demande : **11.11.92 Bulletin 92/46**

(84) Etats contractants désignés : **DE DK GB NL SE**

(71) Demandeur : **ELF FRANCE**
**Tour Elf, Place de la Coupole**
**F-92000 Paris La Défense (FR)**

(72) Inventeur : **Denis, Jacques**
**Les chênes, 18, chemin des Bruyères**
**F-69260 Charbonniere Les Bains France (FR)**
Inventeur : **Forestiere, Alain**
**136 Chemin du Pelet**
**F-69390 Vernaison (FR)**
Inventeur : **Bonardi, Béatrice**
**Le Manoir d'Irlande**
**F-27300 St Aubin Le Vertueux (FR)**
Inventeur : **Damin, Bernard**
**9, Chemin du Petit Revoyet**
**F-69600 Oullins (FR)**

(74) Mandataire : **Andreeff, François**
**INSTITUT FRANCAIS DU PETROLE 4, avenue de Bois-Préau**
**F-92502 Rueil-Malmaison (FR)**

## (54) Polymères amino substitués et leur utilisation comme additifs de modification des propriétés à froid de distillats moyens d'hydrocarbures.

(57) Polymère de masse moléculaire moyenne en nombre de 400 à 20 000 comportant des groupes amino substitués dans sa molécule et résultant de la réaction d'au moins un composé à fonction amine secondaire ayant de 1 à 60 atomes de carbone sur un polyester insaturé résultant de la condensation d'un composé aliphatique insaturé dicarboxylique comportant au moins une insaturation éthylénique en alpha de l'un des groupes carboxyliques sur au moins un composé époxydé ayant de 2 à 62 atomes de carbone choisi parmi les époxyalcanes, les éthers et les esters d'époxyalcools et les esters d'époxyacides.

Composition de distillat moyen ayant un intervalle de distillation de 150 à 450 °C et comprenant une proportion mineure, de préférence de 0,001 à 2 % en poids, d'au moins un des polymères défini ci-avant.

EP 0 512 889 A1

La présente invention concerne des polymères modifiés comportant des groupements latéraux amino-substitués dérivés de composés à fonction amine secondaire.

Les polymères de la présente invention sont en particulier utilisables comme additifs permettant l'amélioration des propriétés d'écoulement à froid des distillats moyens d'hydrocarbures (fuels et gazoles).

Les polymères modifiés de la présente invention résultent de la réaction d'au moins un composé à fonction amine secondaire répondant à la formule générale (I) R-NH-R′, décrite ci-après, sur un polymère de condensation (polyester insaturé), résultant de la condensation d'au moins un composé aliphatique insaturé dicarboxylique, de préférence vicinal, comportant au moins une insaturation éthylénique en alpha de l'un des groupes carboxyliques (dénommé ci-après composé dicarboxylique) et ayant habituellement de 4 à 60 atomes de carbone, de préférence de 4 à 30 atomes de carbone et le plus souvent de 4 à 8 atomes de carbone dans sa molécule, sur au moins un époxyde aliphatique (dénommé ci-après composé époxydé) répondant à la formule générale (II) décrite ci-après.

On a découvert, de façon surprenante, que les polymères modifiés de la présente invention sont des additifs permettant une amélioration importante des propriétés d'écoulement à froid des distillats moyens d'hydrocarbures, en particulier une amélioration du point d'écoulement et/ou du point de trouble des gazoles.

Les polymères de condensation servant à préparer les polymères modifiés de la présente invention sont obtenus par les méthodes classiques de préparation des polymères de condensation, bien connues de l'homme du métier. Ces polyesters insaturés sont, pour certain d'entre eux, connus comme additifs ayant une action sur le point d'écoulement des pétroles bruts et des fuel-oils (US-A-4135887).

Les additifs de la présente invention ont, comme cela sera montré dans les exemples qui suivent, des propriétés au moins équivalentes et dans la majorité des cas supérieures (notamment en ce qui concerne l'amélioration du point d'écoulement des gazoles) à celles des additifs azotés décrits par la demanderesse dans les documents de brevet EP-B-271385 et EP-A-327423. Les additifs décrits dans les documents de brevet antérieurs et obtenus par réaction d'une amine primaire sur un polyester insaturé présentent l'inconvénient de former, à température inférieure ou égale à 50 °C, une solution plus ou moins trouble, dans les hydrocarbures aromatiques tels que le toluène, ce qui est un inconvénient majeur quant à leur utilisation industrielle à grande échelle.

Le composé dicarboxylique que l'on emploie dans la présente invention est habituellement, de préférence, un composé monoinsaturé de 4 à 8 atomes de carbone par molécule, par exemple l'acide maléique, l'acide fumarique, l'acide itaconique, l'acide citraconique, l'acide mésaconique et l'acide glutaconique.

Le composé dicarboxylique est de préférence un anhydride cyclique monoinsaturé tel que par exemple l'anhydride maléique, les anhydrides alkylmaléiques et les anhydrides alcényl-succiniques.

Dans le cadre de l'invention, les anhydrides préférés sont l'anhydride maléique, l'anhydride citraconique (méthylmaléique) et l'anhydride itaconique (méthylènesuccinique). L'anhydride employé le plus souvent est l'anhydride maléique.

Le composé époxydé utilisé dans le cadre de la présente invention est un composé ayant habituellement de 2 à 62 atomes de carbone, de préférence de 2 à 54 atomes de carbone, le plus souvent de 6 à 48 atomes de carbone et avantageusement de 8 à 48 atomes de carbone dans sa molécule. On emploie très souvent des composés époxydés ayant au moins 8 et de préférence au moins 10 atomes de carbone dans leur molécule.

Dans le cadre de la présente invention, on utilise de préférence des composés monoépoxydés ou des mélanges de composés époxydés comprenant de préférence une proportion d'au moins 50 % en mole de composés monoépoxydés et contenant des composés comprenant plusieurs groupes époxydes (cycles oxirannes) dans leur molécule, par exemple deux ou trois groupes époxydes. La proportion molaire de ces composés, dénommés composés polyépoxydés, dans le mélange des composés époxydés est habituellement inférieure à 50 % de préférence inférieure à 40 % et de manière avantageuse inférieure à 30 %. Parmi les composés époxydés que l'on utilise le plus fréquemment, on peut citer les monoépoxyalcanes sensiblement linéaires (c'est-à-dire dont au plus 20 % des atomes de carbone sont dans des groupements méthyles et/ou éthyles latéraux), de préférence terminaux.

Les composés époxydés aliphatiques utilisés dans la présente invention répondent habituellement à la formule générale (II) suivante:

(II) 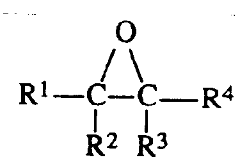

dans laquelle $R^1$ et $R^3$, identiques ou différents, représentent chacun un atome d'hydrogène ou un groupe alkyle

inférieur ayant par exemple de 1 à 4 atomes de carbone, tel que méthyle, éthyle, propyles et butyles ; $R^2$ et $R^4$, identiques ou différents, représentent chacun un atome d'hydrogène, un groupe alkyle, de préférence sensiblement linéaire, ayant de 1 à 60 atomes de carbone, de préférence de 1 à 38 atomes de carbone et plus particulièrement de 4 à 38 atomes de carbone, un groupe alkoxyalkyle de formule $R^5$-O-$R^6$ - dans laquelle $R^5$ représente un groupe alkyle, de préférence sensiblement linéaire, ayant de 1 à 59 atomes de carbone, de préférence de 1 à 37 atomes de carbone et plus particulièrement de 1 à 25 atomes de carbone et $R^6$ représente un groupe alkylène, de préférence sensiblement linéaire, ayant de 1 à 59 atomes de carbone, de préférence de 1 à 37 atomes de carbone, la somme des atomes de carbone de $R^5$ et $R^6$ étant habituellement de 2 à 60, de préférence de 2 à 38 et plus particulièrement de 4 à 38.

Dans la formule du composé époxydé, décrite ci-avant, $R^2$ peut également représenter un groupe alkoxycarbonylalkylène de formule

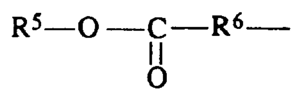

ou un groupe alkylcarbonyloxyalkylène de formule

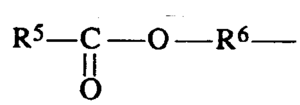

dans lesquelles $R^5$ et $R^6$ ont la définition donnée ci-avant.

Les composés monoépoxydés préférés sont ceux dans lesquels $R^1$ et $R^3$ représentent chacun un atome d'hydrogène, ainsi que ceux dans lesquels $R^1$, $R^3$ et $R^4$ représentent chacun un atome d'hydrogène .

A titre d'exemples de composés monoépoxydés préférés, on peut citer les composés dans lesquels $R^1$, $R^3$ et $R^4$ représentent chacun un atome d'hydrogène et $R^2$ représente un groupe alkyle sensiblement linéaire ayant de 6 à 46 atomes de carbone ; un groupe alkoxyalkyle, sensiblement linéaire, de formule $R^5$-O-$R^6$-, un groupe alkoxycarbonylalkylène, sensiblement linéaire, de formule

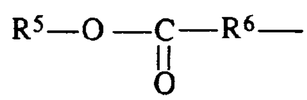

ou un groupe alkylcarbonyloxyalkylène, sensiblement linéaire, de formule

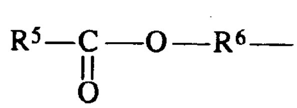

dans lesquelles $R^5$ représente un groupe alkyle, sensiblement linéaire, ayant de 1 à 45 atomes de carbone et de préférence de 1 à 25 atomes de carbone et $R^6$ représente un groupe alkylène, sensiblement linéaire, ayant de 1 à 45 atomes de carbone et de préférence de 5 à 45 atomes de carbone dans le cas du groupe alkoxycarbonylalkylène, la somme des atomes de carbone de $R^5$ et $R^6$ étant de préférence de 6 à 46.

A titre d'exemples de composés monoépoxydés préférés, on peut également citer les composés dans lesquels $R^1$ et $R^3$ représentent chacun un atome d'hydrogène et $R^2$ et $R^4$, identiques ou différents, représentent chacun un atome d'hydrogène ou un groupe alkyle, sensiblement linéaire, ayant de 1 à 60 atomes de carbone, de préférence de 1 à 46 atomes de carbone (monoépoxyalcane sensiblement linéaire), ainsi que les composés dans lesquels $R^4$ représente un atome d'hydrogène ou un groupe alkyle, sensiblement linéaire, tel que défini ci-avant et $R^2$ représente un groupe alkoxycarbonylalkylène tel que défini ci-avant.

A titre d'exemples spécifiques de composés monoépoxydés aliphatiques, on peut citer:

l'oxyde d'éthylène, l'oxyde de propylène, l'époxy-1,2 butane, l'époxy-1,2 pentane, l'époxy-1,2 hexane, l'époxy-1,2 heptane, l'époxy-1,2 octane, l'époxy-1,2 nonane, l'époxy-1,2 décane, l'époxy-1,2 undécane, l'époxy-1,2 dodécane, l'époxy-1,2 tétradécane, l'époxy-1,2 pentadécane, l'époxy-1,2 hexadécane, l'époxy-1,2

heptadécane, l'époxy-1,2 octadécane, l'époxy-1,2 nonadécane, l'époxy-1,2 eicosane, l'époxy-1,2 docosane, l'époxy-1,2 tétracosane, l'époxy-1,2 hexacosane, les polybutènes époxydés de masse moléculaire moyenne en nombre ($\overline{Mn}$) comprise entre environ 100 et environ 1000, l'époxy-2,3 butane, l'époxy-2,3 pentane, l'époxy-2,3 hexane, l'époxy-3,4 heptane, l'époxy-2,3 octane, l'époxy-3,4 octane, l'époxy 3,4 décane, l'époxy-9,10 octadécane, l'éthoxy-3 époxy-1,2 propane, le propoxy-3 époxy-1,2 propane, butoxy-3 époxy-1,2 propane, le pentyloxy-3 époxy-1,2 propane, l'hexyloxy-3 époxy-1,2 propane, l'heptyloxy-3 époxy-1,2 propane, l'octyloxy-3 époxy-1,2 propane, le décyloxy-3 époxy-1,2 propane, le dodécyloxy-3 l'hexyloxy-3 époxy-1,2 propane, l'acétoxy-1 époxy-2,3 propane, le butyryloxy-1 époxy-2,3 propane, le lauroyloxy-l époxy-2,3 propane, le myristoyloxy-3 époxy-1,2 propane, le palmitoyloxy-3 époxy-1,2 propane, le stéaroyloxy-3 époxy-1,2 propane, les esters alkyliques, par exemples méthyliques, éthyliques, propyliques, butyliques, éthyl-2 hexyliques et hexadécyliques des acides époxy-3,4 butanoïque, époxy-4,5 pentanoïque, époxy-3,4 nonanoïque, époxy-10,11 undécanoïque, époxy-6,7 octadécanoïque, époxy-12,13 octadécanoïque, époxy-11,12 octadécanoïque, époxy-9,10 octadécanoïque, époxy-11,12 eicosanoïque et époxy-13,14 docosanoïque.

A titre d'exemples spécifiques de mélange de composés époxydés comprenant des polyépoxydes, on peut citer le mélange d'esters alkyliques obtenu par estérification d'un mélange d'époxyacides résultant de l'époxydation d'un mélange d'acides gras éthyléniquement insaturés.

Le mélange d'acides gras éthyléniquement insaturés est par exemple un mélange comportant, en proportions pondérales approximatives données dans le tableau I ci-après, des acides ayant de 12 à 20 atomes de carbone dans leur molécule et contenant des acides saturés et insaturés. Ce mélange est habituellement dénommé oléine.

## TABLEAU I

| Acides | C* 12 | C* 14 | C 14.1 | C* 15 | C* 16 | C 16.1 | C 17.1 | C* 18 | C 18.1 | C 18.2 | C 18.3 | C 20.1 |
|---|---|---|---|---|---|---|---|---|---|---|---|---|
| %poids | 0,8 | 2,7 | 1,0 | 0,5 | 5,0 | 5,5 | 1,5 | 1,5 | 68,0 | 10,0 | 2,5 | 1,0 |

* acides saturés

Dans le tableau I ci-avant $C_{p.1}$ désigne des acides comportant une insaturation éthylénique, $C_{p.2}$ désigne des acides comportant 2 insaturations éthyléniques et $C_{p.3}$ désigne des acides comportant 3 insaturations éthyléniques (p est le nombre d'atomes de carbone).

Pour l'estérification du mélange d'époxyacides, on utilise par exemple un mélange d'alcools comprenant, en proportion pondérales approximatives, 95 % d'alcool n-hexadécylique, 3 % d'alcool n-octadécylique et 2 % d'alcools ayant plus de 18 atomes de carbone dans leur molécule. Il doit être entendu qu'il est possible de mettre en jeu comme composé époxydé un ou plusieurs composés répondant à la formule (II).

Le polyester insaturé est habituellement obtenu en faisant réagir au moins un composé dicarboxylique (tel que défini ci-avant) avec au moins un composé époxydé (tel que défini ci-avant) en présence d'un catalyseur de condensation, par exemple un acide fort ou un sel de titane, par exemple un titanate d'alkyle en particulier le titanate de n-butyle.

La condensation entre au moins un composé dicarboxylique et au moins un composé époxydé peut être effectuée en présence ou en absence de solvant. On peut par exemple utiliser un solvant hydrocarboné tel que le benzène, l'hexane, le cyclohexane, le toluène, le xylène ou un mélange d'hydrocarbures tel que par exemple une coupe hydrocarbonée à point d'ébullition élevé telle qu'un kérosène ou un gazole.

La réaction de condensation est habituellement effectuée à une température d'environ 30 à 200 °C et de préférence d'environ 50 à 160 °C pendant environ 30 minutes à environ 30 heures et de préférence pendant environ 2 heures à environ 15 heures.

La condensation entre le composé dicarboxylique et le composé époxydé est effectuée en employant des quantités de chacun de ces composés telles que le rapport molaire composé époxydé/composé dicarboxylique soit habituellement d'environ 0,4:1 à 1,8:1 et de préférence d'environ 0,8:1 à environ 1,2:1 et plus particulièrement d'environ 0,9:1 à environ 1,1:1.

Le polyester insaturé ainsi obtenu est ensuite mis en réaction avec au moins un composé à fonction amine secondaire tel que défini ci-après. La réaction est habituellement effectuée en présence d'un solvant qui peut être identique ou différent de celui utilisé dans l'étape de préparation du polyester insaturé.

Lorsque le solvant utilisé dans cette réaction d'addition du composé à fonction amine est le même que celui employé lors de la formation du polyester, il est possible de ne pas isoler le polyester et d'effectuer la réaction sur le produit brut de polycondensation, éventuellement après avoir enlevé le catalyseur employé pour la polycondensation.

Lorsque la polycondensation a été effectuée sans employer de solvant, le polyester est de préférence d'abord dissous avec une quantité de solvant représentant habituellement en poids le poids du polyester formé, puis on effectue la réaction d'addition avec le composé à fonction amine secondaire.

Les composés à fonction amine secondaire que l'on utilise comprennent habituellement de 2 à 61 atomes de carbone, de préférence de 6 à 56 atomes de carbone et plus particulièrement de 8 à 56 atomes de carbone dans leur molécule. Les composés les plus fréquemment employés comprennent au moins 12 et de préférence au moins 16 atomes de carbone dans leur molécule. Ces composés à fonction amine secondaire répondent à la formule générale suivante : (I) R-NH-R′ dans lequel R et R′, identiques ou différents, représentent chacun un groupe aliphatique ayant de 1 à 60 atomes de carbone, de préférence de 5 à 30 atomes de carbone. Les groupes R et R′ sont de préférence substantiellement linéaires (c'est-à-dire qu'au plus 20 % des atomes de carbone sont dans des groupements méthyles et/ou éthyles latéraux) et le plus souvent saturés. On utilise le plus souvent des dialkylamines linéaires, symétriques ou non.

Comme exemples spécifiques de ces amines symétriques, on peut citer: la di-propylamine, la di-butylamine, la di-pentylamine, la di-hexylamine, la di-heptylamine, la di-octylamine, la di-nonylamine, la di-décylamine, la di-dodécylamine, la di-tridécylamine, la di-tétradécylamine, la di-pentadécylamine, la di-hexadécylamine, la di-heptadécylamine, la di-octadécylamine, la di-nonadécylamine, la di-eïcosylamine, la di-docosylamine et la di-tétracosylamine.

Comme exemples spécifiques de ces amines non-symétriques, on peut citer: la N-méthylbutylamine, la N-éthylbutylamine, la N-propyldodécylamine, la N-butyldocécylamine et la N-pentyltridécylamine. On peut également citer les mélanges d'amines sécondaires tel que les mélanges commerciaux vendus sous les noms de Armeen 2C, Armeen 2HT et Armeen 2S par la société ARMAK (ULMANN'S ENCYCLOPEDIA OF INDUSTRIAL CHEMISTRY, 5e Edition, Volume A2, pages 8, 19 et 25).

Il doit être entendu qu'il est possible de mettre en jeu comme composé à fonction amine secondaire un ou plusieurs composés répondant à la formule (I).

La réaction d'addition du composé à fonction amine secondaire sur le polyester insaturé est habituellement effectuée par simple chauffage à une température habituellement d'environ 25 à 200 °C, de préférence de 40 à 160 °C et par exemple à environ 60 °C. La réaction est effectuée par addition du composé à fonction amine secondaire au polyester insaturé dissous dans un solvant choisi par exemple parmi ceux mentionnés ci-dessus, et chauffage, à la température choisie, pendant un temps suffisant pour que la réaction soit substantiellement complète. La durée de la réaction entre le composé à fonction amine secondaire et le polyester insaturé est habituellement d'environ 1 à 24 heures et le plus souvent d'environ 2 à 10 heures et par exemple environ 3 heures. La quantité de composé à fonction amine secondaire mise en réaction est habituellement de 0,2 à 1,5 mole de préférence de 0,4 à 1,2 mole et de manière la plus préférée de 0,4 à 1 mole par mole de composé dicarboxylique mis en jeu dans la formation du polyester insaturé. La quantité de composé à fonction amine est par exemple d'environ 0,5 mole pour 1 mole de composé dicarboxylique.

Les polymères modifiés de la présente invention qui peuvent être avantageusement utilisés comme additifs dans les distillats moyens du pétrole sont ceux qui comportent des chaînes latérales pendantes sensiblement linéaires ayant au moins 8 atomes de carbone, de préférence au moins 10 atomes de carbone et d'une manière la plus préférée au moins 12 atomes de carbone. Ces chaînes latérales peuvent provenir soit du composé époxydé utilisé dans la préparation du polyester insaturé, soit du composé à fonction amine secondaire mis en réaction avec le polyester insaturé, soit à la fois du composé époxydé et du composé à fonction amine secondaire.

De préférence, les polymères modifiés selon l'invention ,utilisés comme additifs dans les distillats moyens, sont ceux qui comportent des chaînes latérales pendantes ayant au moins 8 atomes de carbone et avantageusement au moins 10 atomes de carbone et d'une manière la plus préférée au moins 12 atomes de carbone, provenant à la fois du composé époxydé utilisé dans la préparation du polyester insaturé et du composé à fonction amine secondaire mis en réaction avec le polyester insaturé.

Les polymères modifiés selon l'invention ont habituellement une masse moléculaire en nombre d'environ 400 à 20 000, de préférence d'environ 500 à 10 000 et le plus souvent d'environ 500 à 8 000.

Les polymères modifiés préférés selon l'invention, tels qu'ils sont définis ci-avant, permettent d'avoir simultanément une amélioration du point de trouble et du point d'écoulement des distillats moyens de pétrole, ce qui les rend particulièrement attractifs pour le raffineur.

Les additifs sont obtenus en solution dans le solvant choisi et peuvent être utilisés sous cette forme directement dans les distillats moyens de pétrole (par exemple dans les gazoles) dont on souhaite améliorer le point

d'écoulement et le point de trouble. Cette solution présente l'avantage d'être parfaitement limpide à la température de 50 °C.

Pour observer une nette amélioration simultanée du point de trouble et du point d'écoulement des coupes de gazoles considérées dans l'invention et définies ci-après, il est nécessaire d'ajouter ces additifs à des concentrations allant par exemple de 0,001 à 2 % en poids, de préférence de 0,001 à 1 % en poids et plus avantageusement de 0,02 à 0,3 % en poids.

Les compositions de gazoles selon l'invention comprennent une proportion majeure de distillat moyen de pétrole ayant un intervalle de distillation selon la norme de distillation ASTM D 8667 se situant entre 150 et 450 °C (fuel-oils, gazoles) et une proportion mineure, suffisante pour en abaisser simultanément le point de trouble et le point d'écoulement, d'au moins un polymère modifié défini ci-avant.

Les gazoles considérés plus particulièrement ont un intervalle de distillation allant d'une température initiale d'environ 160 à 190 °C à une température finale d'environ 360 à 430 °C.

Les compositions de gazole comprenant une proportion majeure de distillat moyen et au moins un additif choisi parmi les polymères modifiés selon l'invention, définis ci-avant, en quantité suffisante pour en abaisser le point de trouble et le point d'écoulement, peuvent également comprendre d'autres additifs tels que par exemple des additifs antioxydants, des additifs dispersant les boues, des inhibiteurs de corrosion, etc.

Les compositions comprennent habituellement au moins 95 % et de préférence au moins 98 % en poids de distillat moyen.

L'abaissement du point d'écoulement peut aller, par exemple jusqu'à 21 °C ou plus. En outre, on observe simultanément un abaissement du point de trouble pouvant aller, par exemple, jusqu'à 3 °C ou plus.

Les polymères modifiés utilisés dans l'invention permettent, par leur action sur les phénomènes cinétiques de cristallisation, en particulier des paraffines, et sur la modification de la taille des cristaux qui se forment, l'emploi de la suspension à une température plus basse sans bouchage des canalisations ni colmatage des filtres.

Lorsque les cristaux de paraffines dont la formation est provoquée par le refroidissement sont apparus, leur tendance naturelle est de se rassembler par gravité dans la partie basse. Ce phénomène, connu sous le terme de sédimentation, provoque le bouchage des canalisations et le colmatage des filtres et est préjudiciable à la bonne utilisation des distillats moyens et notamment des gazoles et fuels domestiques à basse température. Les polymères modifiés de l'invention diminuent la vitesse de sédimentation des paraffines formées par refroidissement des gazoles et autres distillats moyens; les paraffines restant davantage en suspension se déposent moins sur les parois des conduites en contact avec les gazoles et autres distillats moyens, retardant ainsi le bouchage des dites conduites, et permettant d'utiliser un produit de caractéristiques données à une température nettement plus basse ou d'employer à une température donnée un produit, qui obtenu par le raffineur sans modification du schéma de distillation, n'a pas initialement les spécifications requises ; spécifications qui évoluent actuellement dans le sens d'une plus grande sévérité.

Les exemples suivants illustrent l'invention sans en limiter la portée.

Dans les exemples, les coupes de gazoles utilisées sont celles qui figurent au tableau II ; elles sont caractérisées d'après la distillation ASTM D 8667, ces coupes de gazoles d'origine ARAMCO sont désignées par G1 et G2 ; leur masse volumique est également indiquée sur le tableau II.

Pour les coupes G1 et G2 sans additif et pour les compositions contenant un additif, deux déterminations ont été effectuées:

- le point de trouble suivant une méthode plus précise que la norme ASTM D 2500. Les tubes sont les mêmes; la descente de température se fait par un bain réfrigérant de façon régulière programmée de 0,5 °C par minute ; et le point de trouble est détecté par variation brutale de la densité optique déterminée par une fibre optique. La température est indiquée par un thermocouple situé à proximité de la fibre optique. Elle est déterminée à 0,1° C près.
- le point d'écoulement suivant la norme ASTM D 97.

## TABLEAU II

| Gazoles | Distillation ASTM | | % distillé à 300 °C | Masse volumique à 15 °C en kg/l | n-Paraffines % poids |
|---|---|---|---|---|---|
| | Pi °C | Pf °C | | | |
| G1 | 171 | 363 | 70,6 | 0,837 | 14 |
| G2 | 178 | 357 | 71 | 0,831 | 16 |

### EXEMPLE 1

On introduit dans un réacteur de 2 litres muni d'un réfrigérant et d'un système d'agitation 246,7 g (2,56 moles) d'anhydride maléique, 720 g (2,56 moles) d'époxyhexadécane à 5,6 % en poids d'oxygène, puis 29,6 g (0,0755 mole) de titanate de n-butyle, et 249 g de toluène. On porte le mélange à 80 °C et on maintient cette température pendant 12 heures tout en agitant. On obtient un polyester insaturé sous forme d'un liquide brun limpide qui peut être caractérisé par les moyens classiques d'analyse: son spectre IR montre la disparition des bandes dues à l'anhydride maléique à 1850 $cm^{-1}$ et 1780 $cm^{-1}$, et l'apparition d'une forte bande ester à 1720 $cm^{-1}$. Par chromatographie de perméation sur gel, on constate une conversion de 90 à 95 % de l'anhydride maléique et de l'époxyhexadécane.

Le polyester obtenu en solution à 80 % en poids dans le toluène constitue la solution mère de l'additif.

### EXEMPLES 2 à 9

On procède sur diverses parts de la solution mère obtenue selon l'exemple 1, contenant le polyester insaturé, à l'addition de composés présentant des fonctions amines.

### EXEMPLE 2

Dans un réacteur de 250 ml muni d'un réfrigérant et d'un système d'agitation, on introduit 20,1 g de la solution mère de l'exemple 1, soit 0,041 équivalent molaire d'anhydride maléique et 13,39 g soit 0,027 équivalent molaire (0,55 pour 1) d'une coupe d'amines grasses secondaires dont les chaînes alkyles comportent en moyenne en moles 1 % de $C_{14}$, 5 % de $C_{16}$, 42 % de $C_{18}$, 12 % de $C_{20}$ et 40 % de $C_{22}$, puis 25,5 g de toluène. Après 1 heure de chauffage à 80°C et 2 heures de chauffage à 110 °C (au reflux) sous azote, en agitant, on obtient une solution limpide de couleur brune. Elle est constituée de l'additif 1 à 50 % en poids dans le toluène. En spectrométrie infra-rouge, on note la disparition de la bande à 1650 $cm^{-1}$ correspondant à l'amine secondaire. Lorsqu'on réchauffe la solution à 50 °C, elle devient parfaitement limpide. Le produit prend en masse à température ambiante (20 °C).

### EXEMPLE 3

La même coupe d'amines grasses secondaires que pour l'exemple 2 est ajoutée dans les mêmes conditions mais en quantité différente pour correspondre à 0,75 équivalent molaire d'amine par équivalent molaire d'anhydride maléique dans le polyester. On obtient alors une solution de l'additif 2 qui est limpide à 50 °C. Le produit prend en masse à température ambiante (20 °C).

**EXEMPLES 4 et 5**

Une autre coupe d'amines grasses secondaires, dont les chaînes alkyles comportent en moyenne en moles 1 % de $C_{14}$, 28 % de $C_{16}$ et 71 % de $C_{18}$, est mise à réagir dans les mêmes conditions que dans les exemples 2 et 3, avec la solution mère de l'additif, constituée du polyester insaturé, en proportions molaires équivalentes de 0,55 et 0,75 pour 1 équivalent molaire d'anhydride maléique dans le polyester. On obtient alors les additifs 3 et 4 à 50 % en poids dans le toluène. Ces solutions sont parfaitement limpides à 50 °C.

**EXEMPLES 6 et 7 (Comparaison)**

A titre de comparaison, une coupe d'amines grasses primaires, dont les chaînes alkyles comprennent environ en moles 1 % de $C_{14}$, 5 % de $C_{16}$, 42 % de $C_{18}$, 12 % de $C_{20}$ et 40 % de $C_{22}$, est mise à réagir avec la même solution de polyester insaturé de l'exemple 1, dans les mêmes conditions que dans les exemples précédents, en proportions molaires équivalentes de 0,55 et 0,75 pour 1 équivalent molaire d'anhydride maléique dans le polyester. On a obtenu les additifs 5 et 6 à 50 % en poids dans le toluène. Ces solutions sont troubles ou légèrement troubles à 50 °C.

**EXEMPLE 8 et 9 (Comparaison)**

A titre de comparaison également, une coupe d'amines grasses primaires, dont les chaînes alkyles comprennent environ 1 % de $C_{14}$, 28 % de $C_{16}$ et 71 % de $C_{18}$, est mise à réagir avec la même solution de polyester insaturé de l'exemple 1, dans les mêmes conditions que dans les exemples précédents, en proportions molaires équivalentes de 0,55 et 0,75 pour 1 équivalent molaire d'anhydride maléique dans le polyester. On a obtenu les additifs 7 et 8, à 50 % en poids dans le toluène. Ces solutions sont troubles ou légèrement troubles à 50 °C.

**EXEMPLE 10**

On prépare de le même manière que dans l'exemple 1 un polyester insaturé qui diffère de celui de l'exemple 1 en ce que l'on emploie une coupe d'époxystéarate d'hexadécyle comme composé époxydé. Cette coupe a été obtenue par époxydation d'oléine (mélange d'acides gras insaturés dont la composition moyenne en poids est donnée dans le tableau I du texte de la présente demande) puis estérification du mélange d'époxy-acides obtenu, par une coupe d'alcools comprenant en proportions pondérales approximatives 95 % d'alcool n-hexadécylique, 3 % d'alcool n-octadécylique et 2 % d'alcool ayant plus de 18 atomes de carbone dans leur molécule. On obtient un polyester insaturé que l'on dilue par une quantité de toluène telle que l'on obtienne une solution à 50 % en poids de polyester.

On procède alors sur une partie de cette solution à l'addition d'une coupe d'amines grasses secondaires, dont les chaînes alkyles comportent en moyenne en moles 1 % de $C_{14}$, 5 % de $C_{16}$, 42 % de $C_{18}$, 12 % de $C_{20}$ et 40 % de $C_{22}$, en suivant le mode opératoire décrit dans l'exemple 2 et en respectant les proportions molaires de l'exemple 2. Le spectre infrarouge confirme l'addition du composé amine secondaire sur la double liaison.

On obtient ainsi une solution de l'additif 9 à 50 % en poids dans le toluène, limpide à 50 °C.

**EXEMPLE 11**

On prépare de la même manière que dans l'exemple 1 un polyester insaturé qui diffère de celui de l'exemple 1 en ce que l'on emploie du n-butoxy-1 époxy-2, 3 propane comme composé époxydé. On obtient un polyester insaturé sous forme d'un produit jaune qui peut être caractérisé par les moyens classiques d'analyse: son spectre IR montre la disparition des bandes dues à l'anhydride maléique à 1850 $cm^{-1}$ et 1780 $cm^{-1}$ et l'apparition d'une forte bande ester à 1720 $cm^{-1}$. On dilue le polyester ainsi formé par du toluène de manière à obtenir une solution du polyester dans le toluène à 50 % en poids.

On procède alors sur une partie de cette solution à l'addition d'une coupe d'amines grasses secondaires, dont les chaînes alkyles comportent en moyenne en moles 1 % de $C_{14}$, 5 % de $C_{16}$, 42 % de $C_{18}$, 12 % de $C_{20}$ et 40 % de $C_{22}$, en suivant le mode opératoire décrit dans l'exemple 2 et en respectant les proportions molaires de l'exemple 2. Le spectre infrarouge confirme l'addition du composé d'amine secondaire sur la double liaison.

On obtient ainsi une solution de l'additif 10 à 50 % en poids dans le toluène, limpide à 50 °C.

Les additifs décrits ci-dessus, en solution à 50 % dans le toluène, ont été incorporés à raison de 0,05 et 0,1 % en poids dans les gazoles G1, G2, dont les caractéristiques ont été données dans le tableau II; et les déterminations de point de trouble et de point d'écoulement ont été effectuées.

Les résultats de ces déterminations sont rassemblés dans le tableau III. Ils montrent que le meilleur compromis pour 0,05 % en poids d'additifs dans le gazole, en abaissement du point de trouble et du point d'écoulement et en aspect, est obtenu pour les additifs 1 et 2 synthétisés avec un époxyalcane et la coupe d'amines secondaires les plus longues.

Les additifs 3 et 4 synthétisés avec une coupe d'amines secondaires moins longues sont bien limpides à 50 °C mais sont moins efficaces en point de trouble. Les additifs 5 à 8 synthétisés pour comparaison avec des coupes d'amines primaires donnent des additifs dont l'efficacité, notamment en point d'écoulement, est plus limitée et dont les solutions dans le toluène sont troubles à 50 °C.

Les additifs 9 et 10 présentent des propriétés un peu inférieures à celles des additifs 1 à 4 pour une même limpidité à 50 °C.

## TABLEAU III

| Additifs % poids | Point de trouble (°C) | | Point d'écoulement (°C) | | Aspect de l'additif : solution à 50 % poids de matière active |
|---|---|---|---|---|---|
| | G1 | G2 | G1 | G2 | à 50 °C |
| néant | - 6 | - 6,2 | - 9 | - 9 | |
| additif 1 | | | | | limpide |
| 0,05 % | - 8,5 | - 8,0 | - 27 | - 21 | |
| 0,1 % | - 9,6 | - 8,8 | - 27 | - 21 | |
| additif 2 | | | | | limpide |
| 0,05 % | - 8,6 | - 7,9 | - 27 | - 21 | |
| 0,1 % | - 9,6 | - 8,8 | - 27 | - 21 | |
| additif 3 | | | | | limpide |
| 0,05 % | - 7,4 | - 7,6 | - 30 | - 24 | |
| 0,1 % | - 8,4 | - 8,4 | - 30 | - 27 | |
| additif 4 | | | | | limpide |
| 0,05 % | - 7,4 | - 7,7 | - 30 | - 24 | |
| 0,1 % | - 8,6 | - 8,6 | - 30 | - 27 | |

**TABLEAU III (Suite)**

| Additifs % poids | Point de trouble (°C) | | Point d'écoulement (°C) | | Aspect de l'additif : solution à 50 % poids de matière active |
|---|---|---|---|---|---|
| | G1 | G2 | G1 | G2 | à 50 °C |
| additif 5 | | | | | trouble |
| 0,05 % | - 9,0 | - 8,0 | - 18 | - 12 | |
| 0,1 % | - 9,7 | - 8,6 | - 18 | - 12 | |
| additif 6 | | | | | trouble |
| 0,05 % | - 8,6 | - 8,4 | - 15 | - 12 | |
| 0,1 % | - 9,6 | - 8,6 | - 15 | - 9 | |
| additif 7 | | | | | trouble |
| 0,05 % | - 7,8 | - 7,4 | - 24 | - 18 | |
| 0,1 % | - 8,9 | - 8,4 | - 24 | - 18 | |
| additif 8 | | | | | trouble |
| 0,05 % | - 7,8 | - 7,4 | - 24 | - 15 | |
| 0,01 % | - 9,2 | - 8,5 | - 24 | - 18 | |
| additif 9 | | | | | limpide |
| 0,05 % | - 7,2 | - 7,2 | - 27 | - 21 | |
| 0,1 % | - 8,3 | - 8,2 | - 27 | - 21 | |
| additif 10 | | | | | limpide |
| 0,05 % | - 7,0 | - 7,0 | - 27 | - 24 | |
| 0,1 % | - 8,1 | - 8,1 | - 27 | - 24 | |

**Revendications**

**1 -** Polymère de masse moléculaire moyenne en nombre de 400 à 20000 comportant des groupes amino-substitués dans sa molécule, caractérisé en ce qu'il résulte de la réaction d'au moins un composé à fonction amine secondaire, comprenant de 2 à 61 atomes de carbone dans sa molécule et répondant à la formule générale:

(I) R-NH-R'

dans laquelle R et R′, identiques ou différents, représentent chacun un groupe aliphatique ayant de 1 à 60 atomes de carbone, sur un polyester insaturé résultant de la condensation d'au moins un composé dicarboxylique insaturé comportant au moins une insaturation éthylénique en alpha de l'un des groupes carboxyliques sur au moins un composé époxydé aliphatique, le rapport molaire composé époxydé/composé dicarboxylique étant d'environ 0,4:1 à 1,8:1 et le rapport molaire composé à fonction amine/composé dicarboxylique étant d'environ 0,2:1 à 1,5:1.

**2 -** Polymère selon la revendication 1 dans lequel le composé dicarboxylique est choisi parmi les anhydrides d'acides dicarboxyliques monoinsaturés ayant de 4 à 60 atomes de carbone dans leur molécule et le composé époxydé aliphatique parmi ceux ayant de 2 à 62 atomes de carbone dans leur molécule.

**3 -** Polymère selon la revendication 1 ou 2 dans lequel le composé époxydé aliphatique est un composé monoépoxydé de formule

(II) 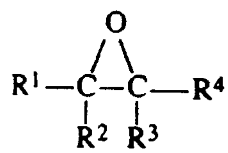

dans laquelle $R^1$ et $R^3$, identiques ou différents, représentent chacun un atome d'hydrogène ou un groupe alkyle inférieur, $R^2$ et $R^4$ identiques ou différents, représentent chacun un atome d'hydrogène, un groupe alkyle ayant de 1 à 60 atomes de carbone, un groupe alkoxyalkyle de formule $R^5$-O-$R^6$- dans laquelle $R^5$ représente un groupe alkyle ayant de 1 à 59 atomes de carbone et $R^6$ représente un groupe alkylène ayant de 1 à 59 atomes de carbone, $R^2$ pouvant également représenter un groupe alkoxycarbonylalkylène de formule

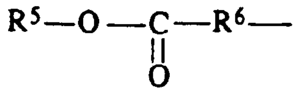

ou un groupe alkylcarbonyloxyalkylène de formule

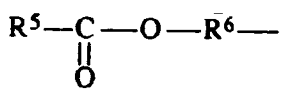

dans lesquels les $R^5$ et $R^6$ ont la définition donnée ci-avant.

**4.** Polymère selon l'une des revendications 1 à 3 dans lequel le composé époxydé aliphatique est un monoépoxyalcane sensiblement linéaire.

**5.** Polymère selon l'une des revendications 1 à 3 dams lequel le composé époxydé aliphatique est un composé de formule

(II) 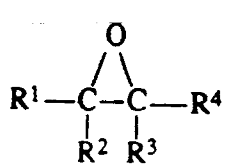

dans laquelle $R^1$ et $R^3$ représentent un atome d'hydrogène, $R^4$ est un atome d'hydrogène ou un groupe alkyle sensiblement linéaire et $R^2$ est un groupe alkoxycarbonylalkylène de formule

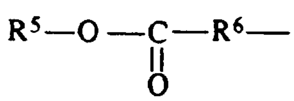

dans laquelle $R^5$ est un groupe alkyle sensiblement linéaire et $R^6$ un groupe alkylène sensiblement linéaire.

**6.** Polymère selon l'une des revendications 1 à 5 dans lequel le composé à fonction amine est une dialkylamine substantiellement linéaire ayant de 6 à 56 atomes de carbone dans sa molécule.

**7.** Polymère selon l'une des revendications 1 à 6 dans lequel le composé à fonction amine secondaire comprend de 8 à 56 atomes de carbone dans sa molécule.

**8.** Composition de distillat moyen caractérisée en ce qu'elle comprend une proportion majeure de distillat moyen ayant un intervalle de distillation entre 150 et 450 °C et une proportion mineure, suffisante pour en abaisser simultanément le point de trouble et le point d'roulement, d'au moins un polymère selon l'une des revendications 1 à 7, ledit polymère comportant des chaînes latérales sensiblement linéaires ayant au moins 8 atomes de carbone.

**9.** Composition de distillat moyen selon la revendication 8 caractérisée en ce que le distillat moyen consiste en une coupe de gazole ayant un intervalle de distillation allant d'une température initiale d'environ 160 °C à 190 °C à une température finale d'environ 360 °C à 430 °C.

**10.** Composition de distillat moyen selon la revendication 8 ou 9 caractérisée en ce que la proportion du polymère est de 0,001 à 2 % en poids.

Office européen des brevets

# RAPPORT DE RECHERCHE EUROPEENNE

Numero de la demande

EP 92 40 1190

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A,D | EP-A-0 271 385 (INSTITUT FRANCAIS DU PETROLE)<br>* revendications 1-11 *<br>--- | 1-3,5,6,8,10 | C 08 G 63/91<br>C 08 G 63/685<br>C 10 L 1/22 |
| A | GB-A-1 017 001 (FARBENFABRIKEN BAYER AG)<br>* revendications 1-4 *<br>--- | 1 | |
| A,D | EP-A-0 327 423 (INSTITUT FRANCAIS DU PETROLE)<br>* revendications 1-9 *<br>--- | 1-3,5,6,8,10 | |
| A,D | US-A-4 135 887 (A. ROSSI)<br>* revendications 1-8 *<br>--- | 8-10 | |
| A | US-A-4 643 737 (R.L. SUNG et al.)<br>* revendication 6 *<br>--- | 1 | |
| A | US-A-2 969 335 (J.K. SIMONS)<br>* revendications 1-6 *<br>----- | 1 | |
| | | | **DOMAINES TECHNIQUES RECHERCHES (Int. Cl.5)** |
| | | | C 08 G<br>C 08 L<br>C 10 L |

Le présent rapport a été établi pour toutes les revendications

| Lieu de la recherche | Date d'achèvement de la recherche | Examinateur |
|---|---|---|
| BERLIN | 05-08-1992 | VOIGTLAENDER R O J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)